# EUROPEAN PATENT SPECIFICATION

(11) **EP 2 874 225 B1**
(45) Date of publication and mention of the grant of the patent: **27.07.2016**
(21) Application number: 14792366.8
(22) Date of filing: 22.05.2014
(51) Int. Cl.: H01M 10/04, H01M 10/0585

(54) **METHOD FOR SECURING ELECTRODE ASSEMBLY USING TAPE**
VERFAHREN ZUR BEFESTIGUNG EINER ELEKTRODENANORDNUNG MITTELS EINES BANDES
PROCÉDÉ POUR FIXER UN ENSEMBLE ÉLECTRODE À L'AIDE D'UNE BANDE

(30) Priority: 30.09.2013 KR 20130116830
(43) Date of publication of application: 20.05.2015
(73) Proprietor: LG Chem, Ltd., Seoul 150-721 (KR)
(72) Inventor: KO, Myung Hoon, Daejeon 305-738 (KR); LEE, Won Sok, Daejeon 305-738 (KR); YANG, Young Joo, Daejeon 305-738 (KR)
(74) Representative: Cabinet Plasseraud
(86) International application number: PCT/KR2014/004591
(87) International publication number: WO 2015/046703

(56) References cited:
- WO-A2-2012/093790
- JP-A- 2004 179 050
- JP-A- 2006 310 254
- JP-A- 2008 204 706
- KR-A- 20070 073 169
- KR-A- 20120 069 905

## Description

### TECHNICAL FIELD

The present invention relates to a method of fixing an electrode assembly by using a tape so that layers constituting the electrode assembly do not move in relation to each other.

### BACKGROUND ART

Secondary batteries have attracted considerable attention as power sources for electric vehicles (EVs), hybrid electric vehicles (HEVs), and plug-in hybrid electric vehicles (PHEVs), which have been developed to solve limitations such as air pollution, caused by existing gasoline and diesel vehicles that use fossil fuels. Here, a medium and large sized device such as vehicles uses a medium and large sized battery module, in which a plurality of battery cells are electrically connected to each other, due to requirement for large output and capacity.

However, since it is preferable to manufacture the medium and large sized battery module as small and lightweight as possible, prismatic and pouch type batteries, which are capable of being charged at high density and is relatively lightweight compared to their capacities, are being mainly used as battery cells of the medium and large sized battery module.

An electrode assembly is accommodated in a case of the battery cell. In general, the electrode assembly having a cathode/separator/anode structure may be classified according to its structure.

Representatively, the electrode assembly may be classified into a jelly-roll type (winding type) electrode assembly that is manufactured by winding long sheet-shaped cathode and anode with a separator therebetween, a stacked type electrode assembly that is manufactured by sequentially stacking a plurality of cathodes and anodes, which are cut into units each of which has a predetermined size, with a separator therebetween, and a stack and folding type electrode assembly.

A stack and folding type electrode assembly disclosed in Korean Patent Publication Nos. 2001-0082058, 2001-0082059, and 2001-0082060 of this applicant has a full cell, which has a structure in which cathode/separator/anode are sequentially stacked, as a unit cell. Here, a separator sheet is repeatedly wound by a unit length so that the full cells are folded over each other in a state where the plurality of full cells is disposed on the long separator sheet. In case of the stack and folding type electrode assembly as described above, since all of the full cells are surrounded by the separator sheet, a relative position between layers constituting the structure of the electrode assembly is fixed.

The stacked type electrode assembly has a structure in which a plurality of electrodes and a plurality of separators are alternately stacked on each other.

In case of the stacked type electrode assembly as described above, in general, the separator has a length and breadth greater than those of the electrode. Thus, the separator is stacked on a magazine or jig having a width corresponding to the length or breadth of the separator, and then, the electrode is stacked on the separator. Thereafter, the above-described processes may be repeatedly performed to manufacture the stacked type electrode assembly. Unlike the stack and folding type electrode assembly, since a relative position between the electrode and the separator is fixed in the stacked type electrode assembly, a method in which a side surface of the electrode assembly is covered by using a tape to fix a relative position between the layers may be generally used.

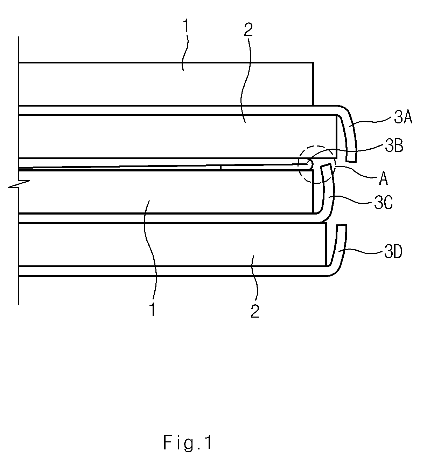

FIG. 1 is a side view of a state in which ends of a plurality of separators provided in a stacked type electrode assembly are irregularly folded according to a related art. When the side surface of the stacked type electrode assembly is covered by the tape, the irregularly folded state illustrated in FIG. 1 may frequently occur.

In more detail, when the side surface of the electrode assembly having a structure in which electrodes 1 and 2 and a separator 3 are alternately stacked on each other is pushed by a tape (not shown), a folded separator 3A that faces a lower side and folded separators 3C and 3D that face an upper side exist. Here, a phenomenon in which the separator 3B is rolled inward between the electrodes 1 and 2 as illustrated by a circle A.

In this case, the electrodes 1 and 2 facing each other with the separator 3B disposed in a circle A may contact each other to cause short-circuit.

As described above, the short-circuit between the electrodes constituting the electrode assembly may occur while the side surface of the electrode assembly manufactured by using the stacking manner is covered by using the tape, thereby causing defective products.

### DISCLOSURE OF THE INVENTION

### TECHNICAL PROBLEM

Accordingly, the present invention aims at providing a method of fixing an electrode assembly, which is capable of minimizing possibility of occurrence of short-circuit between electrodes that may occur while a side surface of the electrode assembly manufactured by using a stacking method is covered by using a tape.

The present invention also aims at providing a method of fixing an electrode assembly, which is capable of fixing a relative position between layers constituting the electrode assembly and preventing electrodes from being short-circuited.

### TECHNICAL SOLUTION

According to an aspect of the present invention, there is provided a method of fixing an electrode assembly, the method including: a step (S10) of manufacturing the electrode assembly having a structure in which a plurality of electrodes and a plurality of separators, each of which has an area greater than that of each of the electrodes, are alternately stacked on each other; a step (S20) of disposing a fixing tape having an intermediate section, that is inclined with respect to a direction in which the electrodes and the separators are stacked, on edges of the separators; and a step (S30) of attaching the fixing tape to the electrode assembly while pushing the edges of the separators with the intermediate section of the fixing tape.

### ADVANTAGEOUS EFFECTS

According to the present invention, the method of fixing the electrode assembly, which is capable of minimizing possibility of occurrence of the short-circuit between electrodes that may occur while the side surface of the electrode assembly manufactured by using the stacking method is covered by using the tape may be provided.

Also, the method of fixing the electrode assembly, which is capable of fixing the relative position between the layers constituting the electrode assembly and preventing the electrodes from being short-circuited may be provided.

### BRIEF DESCRIPTION OF THE DRAWINGS

The following drawings attached in this specification illustrate a preferred embodiment of the present invention and function to make further understood the technical spirit of the present invention along with the detailed description of the invention. The present invention should not be construed as being limited to only the drawings.
FIG. 1 is a side view of a state in which ends of a plurality of separators provided in a stacked type electrode assembly are irregularly folded according to a related art.
FIG. 2 is a view illustrating an operation S20 in a method of fixing an electrode assembly according to the present invention.
FIG. 3 is a view of a state in which an intermediate section of a fixing tape is pushing edges of separators.
FIG. 4 is a view of a state in which the intermediate section of the fixing tape is attached to the edges of the separators.
FIG. 5 is a view of a state in which both ends of the fixing tape are respectively attached to top and bottom surfaces of an electrode assembly.
FIG. 6 is a view illustrating an example of a first moving trajectory of the fixing tape.
FIG. 7 is a view illustrating an example of a second moving trajectory of the fixing tape.
FIG. 8 is a view illustrating an example of a third moving trajectory of the fixing tape.
FIG. 9 is a side view illustrating a first structure of a radical unit provided in an electrode assembly manufactured in operation S10.
FIG. 10 is a side view illustrating a second structure of a radical unit provided in an electrode assembly manufactured in operation S10.
FIG. 11 a view illustrating a process of manufacturing the radical unit provided in the electrode assembly manufactured in the operation S10.
FIG. 12 is a side view illustrating a first structure of an electrode assembly including the radical unit and a first auxiliary unit.
FIG. 13 is a side view illustrating a second structure of the electrode assembly including the radical unit and the first auxiliary unit.
FIG. 14 is a side view illustrating a third structure of an electrode assembly including the radical unit and a second auxiliary unit.
FIG. 15 is a side view illustrating a fourth structure of the electrode assembly including the radical unit and a second auxiliary unit.
FIG. 16 is a side view illustrating a fifth structure of an electrode assembly including the radical unit, the first auxiliary unit, and the second auxiliary unit.
FIG. 17 is a side view illustrating a sixth structure of the electrode assembly including the radical unit and the first auxiliary unit.
FIG. 18 is a side view illustrating a seventh structure of the electrode assembly including the radical unit and the second auxiliary unit.

### MODE FOR CARRYING OUT THE INVENTION

Preferred embodiments of the present invention will be described below in more detail with reference to the accompanying drawings. However, the present invention is not limited to the embodiments below.

Terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

In the drawings, the dimension of each element or a specific portion constituting the element is exaggerated, omitted, or schematically illustrated for convenience in description and clarity. Thus, the dimension of each element does not entirely reflect an actual size. Moreover, detailed descriptions related to well-known functions or configurations will be ruled out in order not to unnecessarily obscure subject matters of the present invention.

A method of fixing an electrode assembly according to the present invention may include a process (S10) of manufacturing an electrode assembly 100 having a structure in which a plurality of electrodes 111 and 113 and a plurality of separators 112 and 114, each of which has an area greater than that of each of the electrodes 111 and 113, are alternately stacked on each other, a process (S20) of disposing a fixing tape T having an intermediate section, which is inclined with respect to a direction in which the electrodes 111 and 113 and the separators 112 and 114 are stacked on each other, on edges of the separators 112 and 114, and a process (S30) of attaching the fixing tape T to the electrode assembly 100 while pushing edges of the separators 112 and 114 with the intermediate section of the fixing tape.

Here, the electrode assembly 100 manufactured in the operation S10 may be a general stacked type electrode assembly or an electrode assembly including at least one radical unit. A structure and manufacturing method of the latter electrode assembly will be described in detail later.

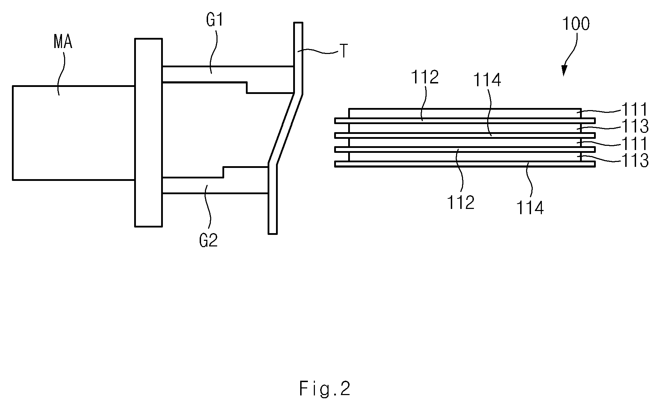

FIG. 2 is a view illustrating an operation S20 in a method of fixing an electrode assembly according to the present invention.

Referring to FIG. 2, the electrode assembly 100 has a structure in which the first electrode 111, the first separator 112, the second electrode 113, and the second separator 114 are sequentially stacked on each other. Here, when the first electrode 111 serves as a cathode, the second electrode may serve as an anode. On the other hand, when the first electrode 111 serves as an anode, the second electrode 113 may serve as a cathode.

The fixing tape T may be formed of a polymer material. Also, the fixing tape T may move by a tape attachment mechanism MA.

Here, the tape attachment mechanism MA may represent a mechanism for moving the fixing tape T to attach the fixing tape to the electrode assembly 100. The tape attachment mechanism MA includes first and second grasping parts G1 and G2 for respectively grasping both ends of the fixing tape T so that the intermediate section of the fixing tape T is inclined. For example, as illustrated in FIG. 2, the first grasping part G1 may further protrude than the second grasping part G2. When both ends of the fixing tape T are grasped by the ends of the first and second grasping part G1 and G2, the intermediate section of the fixing tape T may be smoothly inclined.

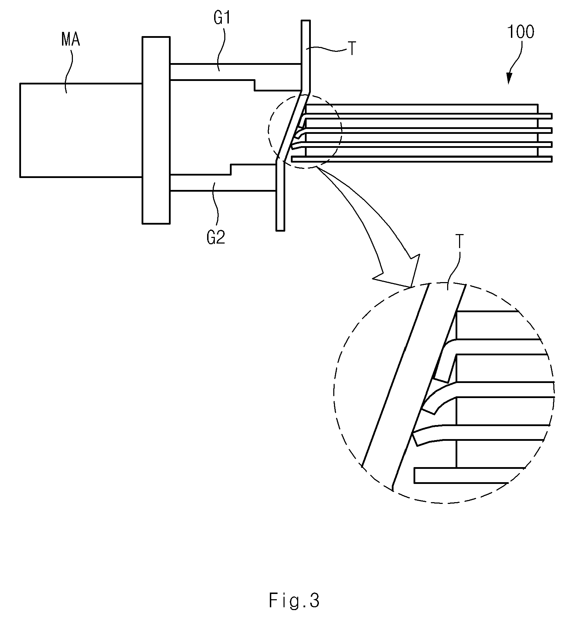

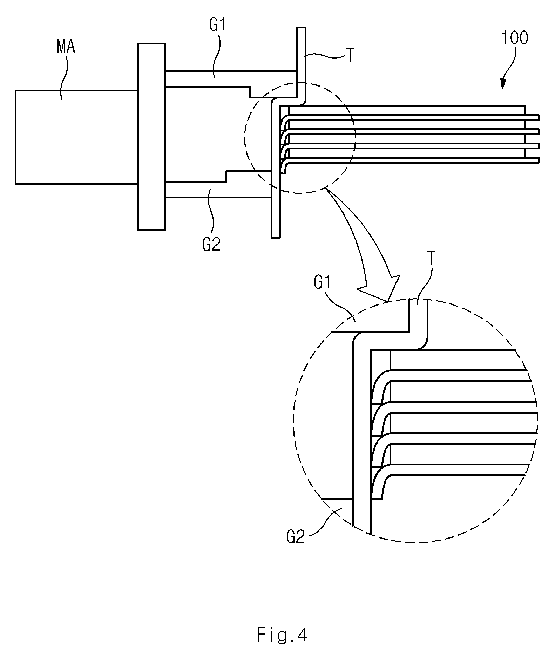

FIG. 3 is a view of a state in which the intermediate section of the fixing tape is pushing edges of separators, and FIG. 4 is a view of a state in which the intermediate section of the fixing tape is attached to the edges of the separators.

When the intermediate section of the fixing tape T approaches and contacts edges of the separators 112 and 114 (i.e., changed from the state of FIG. 2 into the state of FIG. 3), the edges of the separators 112 and 114 may be pushed by the intermediate section of the fixing tape T.

The state of FIG. 3 may be an initial state in operation S30. That is, the intermediate section of the fixing tape T may be obliquely push the edges of the separators 112 and 114 and then bend them downward.

If the intermediate section of the fixing tape T further pushes the edges of the separators 112 and 114 than the pushed degree of FIG. 3, the intermediate section of the fixing tape T may be attached to the edges of the separators 112 and 114 as illustrated in FIG. 4.

In the state of FIG. 4, an upper end of the fixing tape T may be attached to a top surface of the electrode assembly 100 by the first grasping part G1. Here, since the grasping part G2 is shorter than the first grasping par G1, a lower end of the fixing tape T may not be attached yet to the bottom surface of the electrode assembly 100.

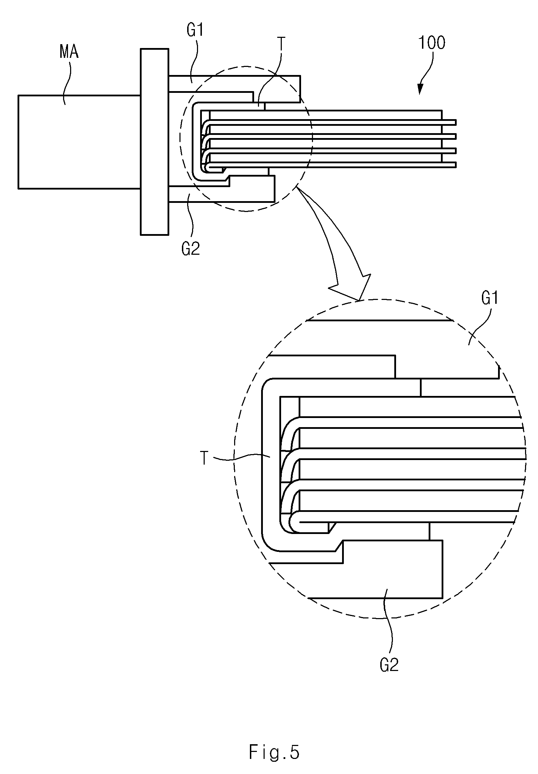

FIG. 5 is a view of a state in which both ends of the fixing tape T are respectively attached to the top and bottom surfaces of the electrode assembly 100.

When the tape attachment mechanism MA horizontally moves in a right direction in the state of FIG. 4, the state of FIG. 4 may become to a state of FIG. 5. Here, the first grasping part G1 may be in a state just before the upper end of the fixing tape T is fully attached to the top surface of the electrode assembly 100, and the second grasping part G2 may be in a state in which an approximately half of the lower end of the fixing tape T is attached to the bottom surface of the electrode assembly 100.

When the tape attachment mechanism MA further horizontally moves in the right direction in the state of FIG. 5, the upper and lower ends of the fixing tape T are successively attached to the top and bottom surfaces of the electrode assembly 100 by the first and second grasping parts G1 and G2, respectively.

As described above, FIG. 2 illustrates the operation S20 in the method of fixing the electrode assembly according to the present invention, and FIGS. 3 to 5 illustrate the operation S30 in the method of fixing the electrode assembly according to the present invention.

Also, the operation S30 may be divided into two processes. That is, the two processes may include a process (S31) of attaching the intermediate section of the fixing tape T to a side surface of the electrode assembly 100 and a process (S32) of respectively attaching both ends of the fixing tape T to the top and bottom surfaces of the electrode assembly 100.

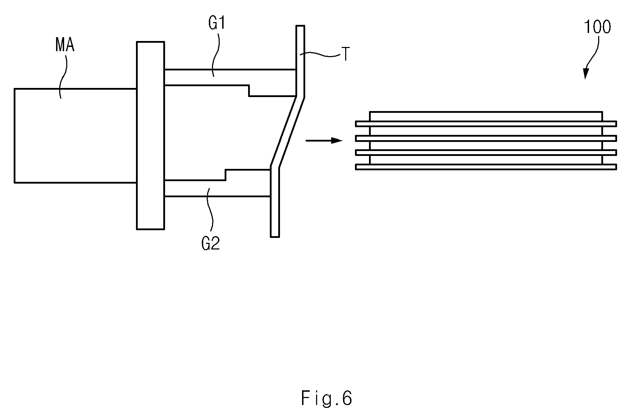

The detailed processes in the operation S30 will be described with reference to FIGS. 6 to 8.

FIG. 6 is a view illustrating an example of a first moving trajectory of the fixing tape. In this case, all of the detailed processes in the operation S30 may be performed by horizontally moving the fixing tape T toward the electrode assembly 100.

That is, the operation S31 may be performed by moving the fixing tape T along a direction of contact surfaces between the electrodes 111 and 113 and the separators 112 and 114, and the operation S32 may be performed by continuously moving the fixing tape T along a direction of the contact surfaces between the electrodes 111 and 113 and the separators 112 and 114. As a result, the fixing tape T may horizontally move in a direction of an arrow shown in FIG. 6 to attach the intermediate section of the fixing tape T to the side surface of the electrode assembly 100. Then, when the fixing tape T horizontally moves in the direction of the arrow, both ends of the fixing tape T may also be attached to the top and bottom surfaces of the electrode assembly 100.

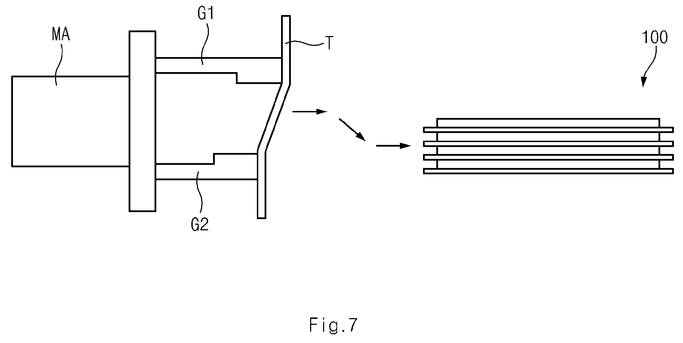

FIG. 7 is a view illustrating an example of a second moving trajectory of the fixing tape. In this case, the operation S31 may be performed by successively moving the fixing tape T in a direction of the leftmost arrow and a direction of a middle arrow among three arrows shown in FIG. 7. As a result, the operation S31 may be performed through the process of moving the fixing tape T in the direction of the contact surfaces of the electrodes 111 and 113 and the separators 112 and 114 and the process of moving the fixing tape T in a lateral downward direction of the electrode assembly 100 so that the intermediate section of the fixing tape T folds the edges of the plurality of separators 112 and 114 in the same direction (in a downward direction in FIG. 7). Also, the operation S32 may be performed by horizontally moving the fixing tape T in a direction of the rightmost arrow among the three arrows shown in FIG. 7.

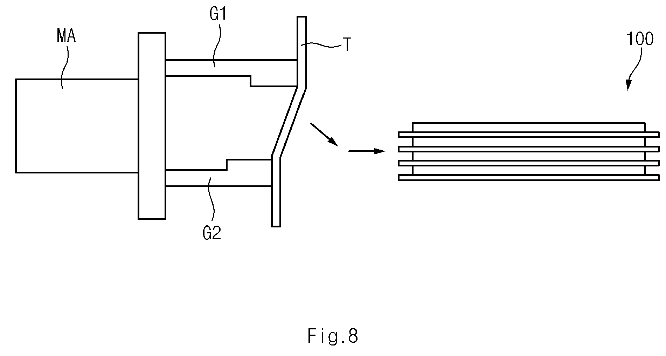

FIG. 8 is a view illustrating an example of third second moving trajectory of the fixing tape. In this case, the operation S31 may be performed by moving the fixing tape T in a direction of a left arrow of arrows shown in FIG. 8. That is, the operation S31 may be performed through the process of moving the fixing tape T in the lateral downward direction of the electrode assembly 100 so that the intermediate section of the fixing tape T folds the edges of the plurality of separators 112 and 114 in the same direction (in the downward direction of FIG. 8). Also, in the operation S32, a moving trajectory may be equal to the above-described second moving trajectory.

Although the first, second, and third moving trajectories are different from each other in the operation S31, the first, second, and third moving trajectories in the operation S32 are the same in that the operation S32 is performed by moving both ends of the fixing tape T grasped by the first and second grasping parts G1 and G2 in the direction of the contact surfaces between the electrodes 111 and 113 and the separators 112 and 114.

Although the left edges of the separators 112 and 114 are folded and fixed by using the fixing tape T in FIGS. 2 to 8, the present invention is not limited thereto. For example, the right edges of the separators 112 and 114 may be folded and fixed as described above. That is, in the operation S20 and S30, both ends of the separators 112 and 114 may be folded and fixed.

So far, although the tape attachment mechanism MA in which the first grasping part G1 further protrudes than the second grasping part G2 is exemplified, the present invention is not limited thereto. For example, a tape attachment mechanism MA in which the second grasping part G2 further protrudes than the first grasping part G1 may be applied to the present invention. In this case, in the operation S31, the intermediate section of the fixing tape T may fold the edges of the separators 112 and 114 upward.

According to the method of fixing the electrode assembly according to the present invention, all of the edges of the separators 112 and 114 may be folded in the same direction through the operation S20 and S30. Thus, the short-circuit between the electrodes 1 and 2, which may occur in the staked type electrode assembly (see FIG. 1) in which the separator 3 is irregularly folded according to the related art may not occur to prevent defective products from being generated.

Also, the fixing tape T may be attached to the top, side, and bottom surfaces of the electrode assembly 100 to fix the relative position between the layers and prevent the electrodes 111 and 113 from being short-circuited.

So far, although the electrode assembly 100 manufactured in the operation S10 having the structure in which the plurality of electrodes 111 and 113 and the separators 112 and 114, each of which has an area greater than that of each of the electrodes 111 and 113, are alternately stacked on each other is exemplified, various structures of the electrode assembly 100 including at least one radical unit 110 and an exemplary process for manufacturing the radical unit 110 will now be described.

The radical unit 110 may be manufactured with a structure including the structure in which the first electrode 111, the first separator 112, the second electrode 113, and the second separator 114 are sequentially stacked on each other.

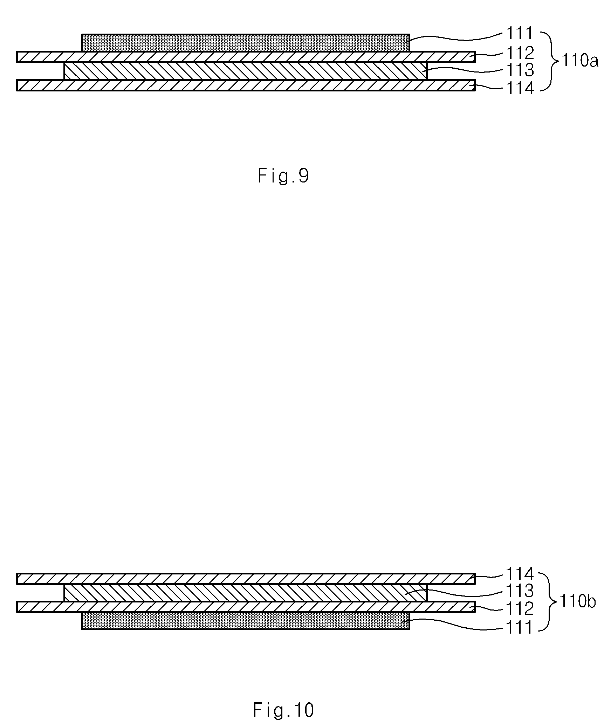

The electrode assembly 100 manufactured in the operation S10 may include at least one radical unit (see reference numeral 110a and 110b in FIGS. 9 and 10).

The radical unit 110 may be manufactured by sequentially stacking the first electrode 111, the first separator 112, the second electrode 113, and second separator 114. The radical unit 110 as described above may fundamentally have a four-layered structure. In more detail, the radical unit 110 may be manufactured by sequentially stacking the first electrode 111, the first separator 112, the second electrode 113, and the second separator 114 downward as illustrated in FIG. 9 or sequentially stacking the first electrode 111, the first separator 112, the second electrode 113, and the second separator 114 upward as illustrated in FIG. 10. Here, the first and second electrodes 111 and 113 may have polarities opposite to each other. For example, if the first electrode 111 serves as a cathode, the second electrode 113 may serve as an anode, and vice versa.

The first electrode 111 provided in the radical unit 110 may include a collector and a coating portion (an active material), and the active material may be applied to both surfaces of the collector. Similarly, the second electrode 113 provided in the radical unit 110 may include a collector and a coating portion (an active material), and the active material may be applied to both surfaces of the collector.

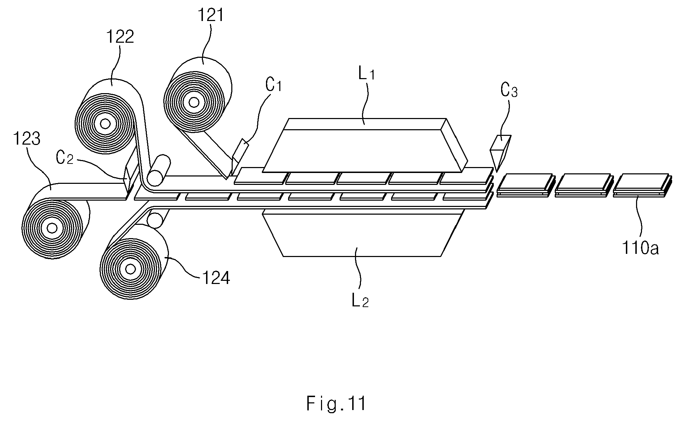

A process of manufacturing the radical unit 110 may be performed as following continuous processes (see FIG. 11). A first electrode material 121, a second separator material 122, a second electrode material 123, and a second separator material 124 are prepared. Here, each of the electrode materials 121 and 123 may be cut by a predetermined size to form electrodes 111 and 113 as described below. Also, each of the separator materials 122 and 124 may be cut by a predetermined size to form separators 112 and 114. To automatically perform the above-described processes, the electrode materials 121 and 123 and the separator materials 122 and 124 may be wound around rolls, respectively. After the above-described materials are prepared, the first electrode material 121 may be cut by a predetermined distance through a cutter C1. Also, the second electrode material 123 may be cut by a predetermined size through a cutter C2. Then, the first electrode material 121 having the predetermined size may be supplied onto the first separator material 122. Also, the second electrode material 123 having the predetermined size may be supplied onto the second separator material 124. Then, the above-described materials may be supplied together to the laminates L1 and L2.

As described above, the electrode assembly may be formed by repeatedly stacking the radical unit 110. However, if the electrode and separator constituting the radical unit 110 are separated from each other, it may be vary difficult to repeatedly stack the radical unit 110. Thus, the electrode and separator of the radical unit 110 may adhere to each other. Here, the laminators L1 and L2 may be used for allowing the electrodes and the separators to adhere to each other. That is, the laminators L1 and L2 may apply pressure to the materials or apply heat and pressure to the materials to allow the electrode materials and the separator materials to adhere to each other. As described above, the electrode materials and the separator materials may adhere to each other through a laminating process by using the laminators L1 and L2. Thus, the radical unit 110 may be more stably maintained in its original shape through the adhesion between the materials.

After the layers are laminated on each other, the first separator material 122 and the second separator material 124 may be cut by a predetermined size through a cutter C3. The radical unit 110 may be formed through the above-described cutting process. Here, if necessary, various inspection processes with respect to the radical unit 110 may be performed. For example, inspection processes such as thickness inspection, vision inspection, and short-circuit inspection may be additionally performed.

Although the process of manufacturing the radical unit 110 is performed through the above-described continuous processes, the continuous processes have not to be performed. That is, the first electrode 111, the first separator 112, the second electrode 113, and the second separator 114 may be respectively cut by adequate sizes and then be stacked on each other to form the radical unit 110.

Surfaces of the separators 112 and 114 or the separator materials 122 and 124 may be coated with a coating material having adhesion. Here, the coating material may be a mixture of inorganic particles and binder polymer. The inorganic particles may improve thermal stability of the separator. That is, the inorganic particles may prevent the separator from being contracted at a high temperature. Also, the binder polymer may fix the inorganic particles. Thus, predetermined porous structures may be formed between the inorganic particles fixed by the binder polymer. Due to the porous structures, even though the inorganic particles are applied to the separator, ions may smoothly move from the cathode to the anode. Also, the binder polymer may stably maintain the to the separator to improve mechanical stability of the separator. Furthermore, the binder polymer may allow the separator to more stably adhere to the electrode. For reference, the separator may be formed of a polyolefin-based separator base material.

As illustrated in FIGS. 9 and 10, the electrodes 111 and 113 may be disposed on both surfaces of the first separator 112, but the electrode 113 may be disposed on only one surface of the second separator 114. Thus, both surfaces of the first separator 112 may be coated with the coating material, and only one surface of the second separator 114 may be coated with the coating material. That is, both surfaces of the first separator 11, which face the first and second electrodes 111 and 113, may be coated with the coating material, and only one surface of the second separator 114, which faces the second electrode 113, may be coated with the coating material.

As described above, the adhesion using the coating material may be performed within the radical unit 110. Thus, as described above, only the one surface of the second separator 114 may be coated with the coating material. However, the radical units 110 may adhere to each other through a process such as heat press. If necessary, both surfaces of the second separator 114 may be coated with the coating material. That is, the one surface of the second separator 114, which faces the second electrode 113, and the opposite surface of the second separator 114 may be coated with the coating material. In this case, the upper radical unit 110 and the radical unit 110 disposed just below the upper radical unit 110 may adhere to each other through the coating material applied to the outer surface of the second separator 114.

For reference, when the coating material having adhesion is applied to the separator, a pressure may be directly applied to the separator by using a predetermined object. In general, the separator may further extend outward from the electrode. Thus, an end of the first separator 112 and an end of the second separator 114 may be coupled to each other. For example, the end of the first separator 112 and the end of the second separator 114 may be welded to each other through ultrasonic welding. In the ultrasonic welding, the objects to be welded may be directly pressed by using a horn. However, if the ends of the separators are directly pressed by using the horn, the horn may adhere to the separators due to the coating material having the adhesion. Thus, failure in the device may occur. As a result, when the coating material having the adhesion is applied to the separator, the process of directly applying a pressure to the separator by using a predetermined object may be performed.

In addition, it may be unnecessary to provide the radical unit 110 having the four-layered structure. For example, the radical unit 110 may have an eight-layered structure in which the first electrode 111, the first separator 112, the second electrode 113, the second separator 114, the first electrode 111, the first separator 112, the second electrode 113, and the second separator 114 are sequentially stacked on each other. That is, the radical unit 110 may have a structure in which the four-layered structure is repeatedly stacked on each other. As described above, the electrode assembly 100 may be formed by repeatedly stacking the radical unit 110. Thus, the four-layered structure may be repeatedly stacked to form the electrode assembly 100. Alternatively, the eight-layered structure may be repeatedly stacked to form the electrode assembly 100.

The electrode assembly 100 may further include at least one of a first auxiliary unit 130 and a second auxiliary unit 140. First, the first auxiliary unit 130 will now be described. The radical unit 110 may be formed by sequentially stacking the first electrode 111, the first separator 112, the second electrode 113, and the second separator 114 upward or downward. Thus, when the radical unit 110 is repeatedly stacked to form the electrode assembly 100, the first electrode 111 (hereinafter, referred to as a first end electrode 116) is at the uppermost position (see FIG. 9) or the lowermost position (see FIG. 10) of the electrode assembly 100 (here, the first end electrode may be an anode or cathode). A first auxiliary unit 130 may be additionally stacked on the first end electrode 116.

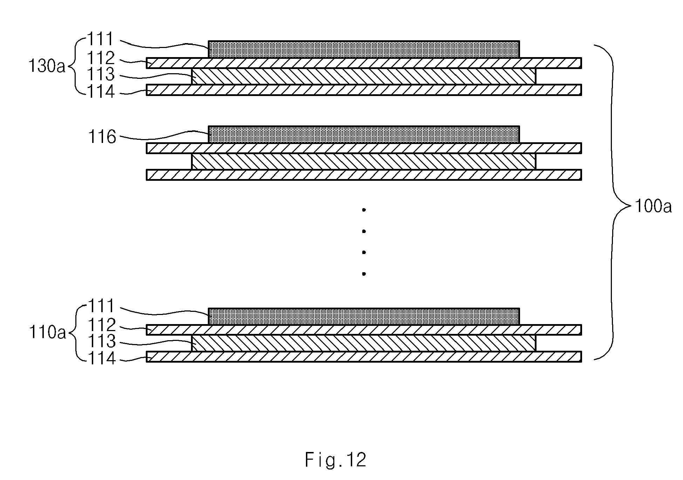

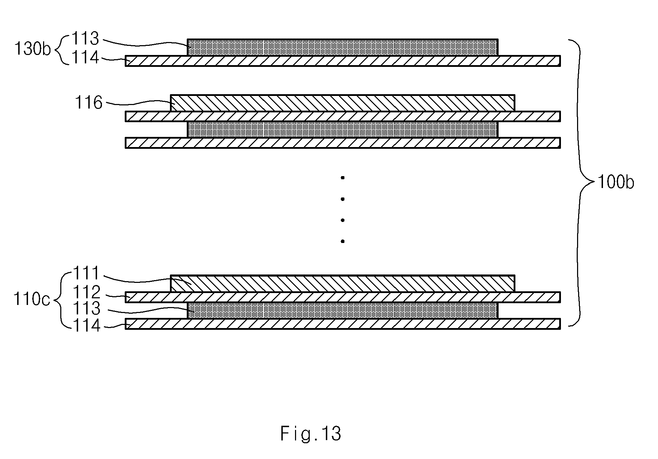

In more detail, if the first electrode 111 serves as the cathode, and the second electrode 113 serves as the anode as illustrated in FIG. 12, the separator 114, the anode 113, the separator 112, and the cathode 111 may be sequentially stacked from the first end electrode 116, i.e., outward (an upper side with respect to FIG. 12) from the first end electrode 116 to form a first auxiliary unit 130a. Also, if the first electrode 111 serves as the anode, and the second electrode 113 serves as the cathode as illustrated in FIG. 13, the separator 114 and the cathode 113 may be sequentially stacked from the first end electrode 116, i.e., outward from the first end electrode 116 to form the first auxiliary unit 130b. As illustrated in FIG. 12 or 13, in the electrode assembly 100, the cathode may be disposed at the outermost position of the first end electrode 116 by the first auxiliary unit 130.

In general, the electrode may include a collector and a coating portion (an active material), and the active material may be applied to both surfaces of the collector. Thus, the coating portion, which is disposed under the collector with respect to FIG. 12, of the cathode coating portion may react with the coating portion, which is disposed above the collector, of the anode coating portion by using the separator as a medium. However, when the radical units 110 having the same structure are formed and then sequentially stacked to form the electrode assembly 100, the first end electrode that is disposed at the uppermost or lowermost position of the electrode assembly 100 may include the coating portion on each of both surfaces of the collector, like the other first electrode 111. However, if the first end electrode has the structure in which the active material is applied to each of both surfaces of the collector, the coating portion disposed outside the coating portion of the first end electrode may not react with the other coating portion. Thus, the coating portion may be wasted.

The first auxiliary unit 130 may be provided to solve the above-described limitation. That is, the first auxiliary unit 130 may be provided as a separate member that is separated from the radical unit 110. Thus, the first auxiliary unit 130 may include a cathode in which the coating portion is disposed on only one surface of the collector. That is, the first auxiliary unit 130 may include a cathode in which the active material is applied to only one surface (one surface facing a lower side in FIG. 12) facing the radical unit 110 of both surfaces of the collector. As a result, when the first auxiliary unit 130 is additionally stacked on the first end electrode 116 to form the electrode assembly 100, the cathode of which only one surface is coated may be disposed at the outermost portion of the first end electrode 116. Thus, the waste of the coating portion may be prevented. Also, since the cathode releases, for example, nickel ions, it may be advantageous in battery capacity when the cathode is disposed at the outermost portion.

Next, the second auxiliary unit 140 will now be described. The second auxiliary unit 140 may fundamentally perform the same function as the first auxiliary unit 130. This will be described in more detail. The radical unit 110 may be formed by sequentially stacking the first electrode 111, the first separator 112, the second electrode 113, and the second separator 114 upward or downward. Thus, when the radical unit 110 is repeatedly stacked to form the electrode assembly 100, the second separator 114 (hereinafter, referred to as a second end separator 117) is at the uppermost position (see FIG. 10) or the lowermost position (see FIG. 9) of the electrode assembly 100. A second auxiliary unit 140 may be additionally stacked on the second end separator 117.

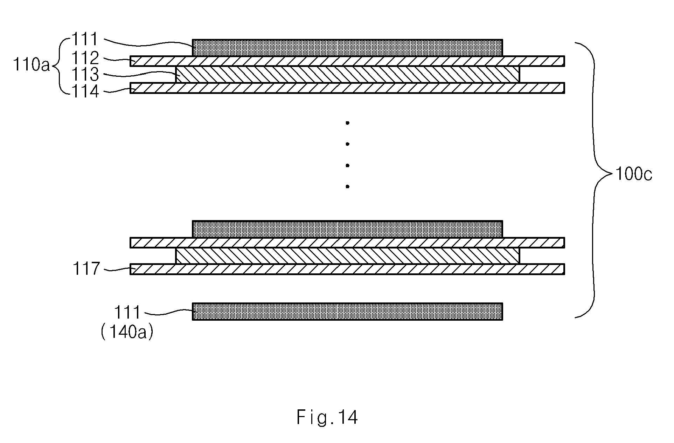

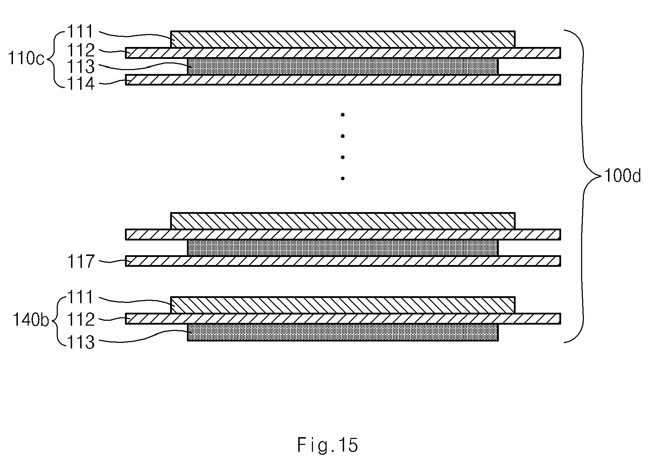

In more detail, as illustrated in FIG. 14, when the first electrode 111 serves as the cathode, and the second electrode 113 serves as the anode, a second auxiliary unit 140a may be provided as the cathode 111. Also, if the first electrode 111 serves as the anode, and the second electrode 113 serves as the cathode as illustrated in FIG. 15, the anode 111, the separator 112, and the cathode 113 may be sequentially stacked from the second end separator 117, i.e., outward (a lower side with respect to FIG. 15) from the second end separator 117 to form a second auxiliary unit 140b. Like the first auxiliary unit 130, the second auxiliary unit 140 may include a cathode in which the active material is applied to only one surface (one surface facing an upper side in FIG. 15) facing the radical unit 110 of both surfaces of the collector. As a result, when the second auxiliary unit 140 is additionally stacked on the second end separator 117 to form the electrode assembly 100, the cathode of which only one surface is coated may be disposed at the outermost portion of the second end separator 117.

For reference, FIGS. 12, 13, 14, and 15 illustrate the structure in which the first electrode 111, the first separator 112, the second electrode 113, and the second separator 114 are sequentially stacked downward on each other. On the other hand, the structure in which the first electrode 111, the first separator 112, the second electrode 113, and the second separator 114 are sequentially stacked downward on each other may be equally described as described above. Also, if necessary, each of the first and second auxiliary units 130 and 140 may further include a separator at the outermost portion thereof. For example, if it is needed to electrically insulate the cathode disposed at the outermost position from the case, each of he the separator may further include a separator outside the cathode. Thus, as illustrated in FIG. 14, a separator may be further provided to the cathode exposed to a side (the uppermost portion of the electrode assembly 100 in FIG. 14) opposite to the side at which the second auxiliary unit 140 is stacked.

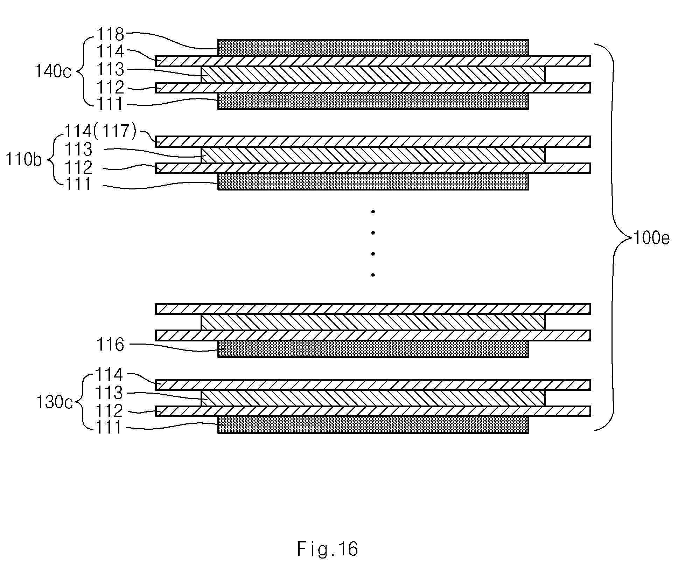

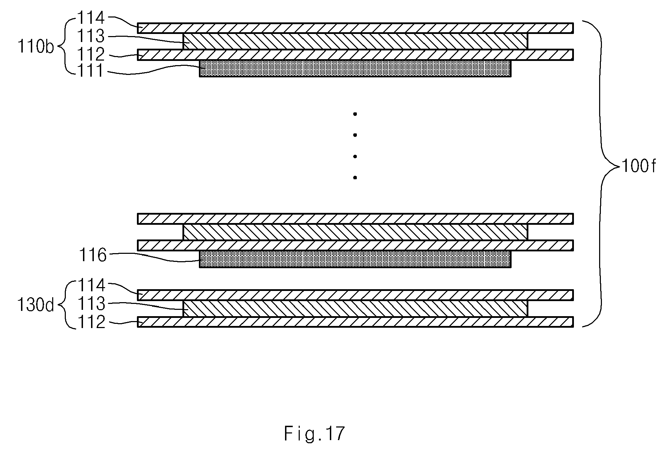

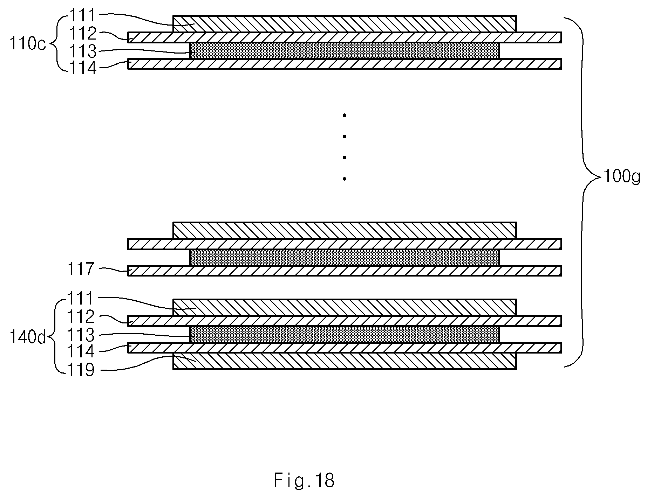

The electrode assembly 100 may be formed as illustrated in FIGS. 16 to 18. First, an electrode assembly 110e may be formed as illustrated in FG. 16. A radical unit 110b may be formed by sequentially stacking the first electrode 111, the first separator 112, the second electrode 113, and second separator 114 upward. Here, the first electrode 111 may serve as a cathode, and the second electrode 113 may serve as an anode. Also, a first auxiliary unit 130c may be formed by sequentially stacking the separator 114, the anode 113, the separator 112, and the cathode 111 on each other from the first end electrode 116, i.e., downward with respect to FIG. 16. Here, a coating portion may be formed on only one surface facing the radical unit 110b of the cathode 111 of the first auxiliary unit 130c.

Also, a second auxiliary unit 140c may be formed by sequentially stacking the cathode 111 (the first cathode), the separator 112, the anode 113, the separator 114, and the cathode 118 (the second cathode) on each other from the second end separator 117, i.e., upward with respect to FIG. 16. Here, a coating portion may be formed on only one surface facing the radical unit 110b of the cathode 118 (the second cathode), which is disposed at the outermost position, of the cathodes of the second auxiliary unit 140c. For reference, when the auxiliary unit includes the separator, the units may be easily aligned with each other.

Next, an electrode assembly 110f may be formed as illustrated in FG. 17. A radical unit 110b may be formed by sequentially stacking the first electrode 111, the first separator 112, the second electrode 113, and second separator 114 upward. Here, the first electrode 111 may serve as a cathode, and the second electrode 113 may serve as an anode. Also, a first auxiliary unit 130d may be formed by sequentially stacking the separator 114, the anode 113, and the separator 112 on each other from the first end electrode 116. Here, the second auxiliary unit may be omitted. For reference, the anode may react with an aluminum layer of a pouch exterior material due to potential difference thereof. Thus, the anode may be electrically insulated from the pouch exterior material by the separator.

Last, an electrode assembly 110g may be formed as illustrated in FG. 18. A radical unit 110c may be formed by sequentially stacking the first electrode 111, the first separator 112, the second electrode 113, and second separator 114 downward. Here, the first electrode 111 may serve as an anode, and the second electrode 113 may serve as a cathode. Also, a second auxiliary unit 140d may be formed by sequentially stacking the anode 111, the separator 112, the cathode 113, the separator 114, and the anode 119 from the second end separator 117. Here, the first auxiliary unit may be omitted.

Although the operation S40 in the method of manufacturing the electrode assembly according to the embodiment of the present invention describes the case in which the radical unit 110 stacked in a plurality of layers, this is a merely an example for convenience of description, and thus, the electrode assembly 100 has not to be constituted by only the radical unit 110. That is, in the operation S40, the auxiliary units 130 and 140 may be stacked and aligned together with the radical unit 100 on the top or bottom surface or the top and bottom surfaces of the single-layered or multi-layered radical unit 100.

While this invention has been particularly shown and described with reference to preferred embodiments thereof, it will be understood by those skilled in the art that various changes in form and details may be made therein without departing from the scope of the invention as defined by the appended claims.

## Claims

1. A method of fixing an electrode assembly, the method comprising:
a step (S10) of manufacturing the electrode assembly having a structure in which a plurality of electrodes and a plurality of separators, each of which has an area greater than that of each of the electrodes, are alternately stacked on each other;
a step (S20) of disposing a fixing tape having an intermediate section, that is inclined with respect to a direction in which the electrodes and the separators are stacked, on edges of the separators; and
a step (S30) of attaching the fixing tape to the electrode assembly while pushing the edges of the separators with the intermediate section of the fixing tape.

2. The method of claim 1, wherein, in the step (S30), the intermediate section of the fixing tape obliquely pushes the edges of the separators.

3. The method of claim 1, wherein the step (S30) comprises:
a step (S31) of attaching the intermediate section of the fixing tape to a side surface of the electrode assembly; and
a step (S32) of respectively attaching both ends of the fixing tape to top and bottom surfaces of the electrode assembly.

4. The method of claim 3, wherein the step (S31) comprises:
a step of moving the fixing tape along a direction of contact surfaces between the electrodes and the separators; and
a step of moving the fixing tape in a lateral downward or lateral upward direction of the electrode assembly so that the intermediate section of the fixing tape folds the edges of the plurality of separators in the same direction.

5. The method of claim 1, wherein the step (S30) is performed by a tape attachment mechanism comprising first and second grasping parts for grasping both ends of the fixing tape so that the intermediate section of the fixing tape is inclined.

6. The method of claim 5, wherein the step (S30) comprises a step (S32) of respectively attaching both ends of the fixing tape to top and bottom surfaces of the electrode assembly, and
the step (S32) is performed by moving both ends of the fixing tape grasped by the first and second grasping parts of the tape attachment mechanism along a direction of contact surfaces between the electrodes and the separators.

7. The method of claim 1, wherein the electrode assembly manufactured in the step (S10) comprises at least one radical unit, and
the radical unit has a stacking structure in which a first electrode, a first separator, a second electrode, and a second separator are sequentially stacked on each other.

8. The method of claim 7, wherein the radical unit has a structure in which the stacking structure is repeated a plurality of times.

9. The method of claim 7, wherein the radical unit is formed by allowing the electrodes and the separators to adhere to each other.

10. The method of claim 9, wherein a surface of each of the separators is coated with a coating material having adhesion.

11. The method of claim 10, wherein the coating material comprises a mixture of inorganic particles and a binder polymer.

12. The method of claim 10, wherein both surfaces of the first separator, which respectively face the first and second electrodes, are coated with the coating material, and only one surface of the second separator, which faces the second electrode, is coated with the coating material.

13. The method of claim 7, wherein the electrode assembly manufactured in the step (S10) further comprises a first auxiliary unit stacked on a first end electrode that is the uppermost or lowermost first electrode, and
the first auxiliary unit is formed by sequentially a separator, an anode, a separator, and a cathode from the first end electrode when the first electrode is the cathode, and the second electrode is the anode, and formed by sequentially the separator and the cathode from the first end electrode when the first electrode is the anode, and the second electrode is the cathode.

14. The method of claim 13, wherein the cathode of the first auxiliary unit comprises:
a collector; and
a cathode active material that is applied to only one surface, which faces the radical unit, of both surfaces of the collector.

15. The method of claim 7, wherein the electrode assembly manufactured in the step (S10) further comprises a first auxiliary unit stacked on a first end electrode that is the uppermost or lowermost first electrode, and
the first auxiliary unit is formed by sequentially a separator, an anode, and a separator from the first end electrode when the first electrode is the cathode, and the second electrode is the anode.

16. The method of claim 7, wherein the electrode assembly manufactured in the step (S10) further comprises a second auxiliary unit stacked on a second end separator that is the uppermost or lowermost second separator, and
the second auxiliary unit serves as a cathode when the first electrode is a cathode, and the second electrode is an anode, and is formed by sequentially an anode, a separator, and a cathode from the second end separator when the first electrode is the anode, and the second electrode is the cathode.

17. The method of claim 16, wherein the cathode of the second auxiliary unit comprises:
a collector; and
a cathode active material that is applied to only one surface, which faces the radical unit, of both surfaces of the collector.

18. The method of claim 7, wherein the electrode assembly manufactured in the step (S10) further comprises a second auxiliary unit stacked on a second end separator that is the uppermost or lowermost second separator,
the second auxiliary unit is formed by sequentially a first cathode, a separator, an anode, a separator, and a second cathode from the second end separator when the first electrode is the cathode, and the second electrode is the anode, and
the second cathode of the second auxiliary unit comprises a collector and a cathode active material, and the cathode active material is applied to only one surface, which faces the radical unit, of both surfaces of the collector.

19. The method of claim 7, wherein the electrode assembly manufactured in the step (S10) further comprises a second auxiliary unit stacked on a second end separator that is the uppermost or lowermost second separator, and
the second auxiliary unit is formed by sequentially an anode, a separator, a cathode, a separator, and an anode from the second end separator when the first electrode is the anode, and the second electrode is the cathode.

## Patentansprüche

1. Verfahren eines Befestigens einer Elektrodenanordnung, wobei das Verfahren umfasst:
einen Schritt (S10) eines Herstellens der Elektrodenanordnung, welche eine Struktur aufweist, in welcher eine Mehrzahl von Elektroden und eine Mehrzahl von Separatoren, von welchen jeder einen Bereich aufweist, der größer ist als der von jeder der Elektroden, abwechselnd aufeinander gestapelt sind;
einen Schritt (S20) eines Anordnens eines Befestigungsbands mit einem Zwischenabschnitt, welcher bezüglich zu einer Richtung, in welcher die Elektroden und die Separatoren gestapelt sind, geneigt ist, an Rändern der Separatoren; und
einen Schritt (S30) eines Anbringens des Befestigungsbands an die Elektrodenanordnung, während die Ränder der Separatoren mit dem Zwischenabschnitt des Befestigungsbands gedrückt werden.

2. Verfahren nach Anspruch 1, wobei, in dem Schritt (S30), der Zwischenabschnitt des Befestigungsbands die Ränder der Separatoren schräg drückt.

3. Verfahren nach Anspruch 1, wobei der Schritt (S30) umfasst:
einen Schritt (S31) eines Anbringens des Zwischenabschnitts des Befestigungsbands an eine Seitenfläche der Elektrodenanordnung; und
einen Schritt (S32) eines jeweiligen Anbringens von beiden Enden des Befestigungsbands an eine Oberfläche und eine Unterfläche der Elektrodenanordnung.

4. Verfahren nach Anspruch 3, wobei der Schritt (S31) umfasst:
einen Schritt eines Bewegens des Befestigungsbands entlang einer Richtung von Kontaktflächen zwischen den Elektroden und den Separatoren; und
einen Schritt eines Bewegens des Befestigungsbands in einer von der Elektrodenanordnung lateralen Abwärts- oder lateralen Aufwärtsrichtung, so dass der Zwischenabschnitt des Befestigungsbands die Ränder der Mehrzahl von Separatoren in die gleiche Richtung umklappt.

5. Verfahren nach Anspruch 1, wobei der Schritt (S30) mittels eines Bandanbringungsmechanismus durchgeführt wird, welcher erste und zweite Griffteile zum Greifen beider Enden des Befestigungsbands umfasst, so dass der Zwischenabschnitt des Befestigungsbands geneigt wird.

6. Verfahren nach Anspruch 5, wobei der Schritt (S30) einen Schritt (S32) eines jeweiligen Anbringens von beiden Enden des Befestigungsbands an eine Oberfläche und eine Unterfläche der Elektrodenanordnung umfasst, und
der Schritt (S32) durch ein Bewegen beider Enden des Befestigungsbands durchgeführt wird, welches durch die ersten und zweiten Griffteile des Bandanbringungsmechanismus entlang einer Richtung von Kontaktflächen zwischen den Elektroden und den Separatoren gegriffen wird.

7. Verfahren nach Anspruch 1, wobei die in dem Schritt (S10) hergestellte Elektrodenanordnung wenigstens eine Grundeinheit umfasst, und
die Grundeinheit eine Stapelstruktur aufweist, in welcher eine erste Elektrode, ein erster Separator, eine zweite Elektrode und ein zweiter Separator aufeinanderfolgend aufeinander gestapelt sind.

8. Verfahren nach Anspruch 7, wobei die Grundeinheit eine Struktur aufweist, in welcher die Stapelstruktur mehrmals wiederholt wird.

9. Verfahren nach Anspruch 7, wobei die Grundeinheit ausgebildet wird, indem es den Elektroden und den Separatoren erlaubt wird, aneinander zu haften.

10. Verfahren nach Anspruch 9, wobei eine Fläche jeder der Separatoren mit einem eine Haftfähigkeit aufweisenden Beschichtungsmaterial beschichtet ist.

11. Verfahren nach Anspruch 10, wobei das Beschichtungsmaterial eine Mischung von anorganischen Partikeln und einem Bindepolymer umfasst.

12. Verfahren nach Anspruch 10, wobei beide Flächen des ersten Separators, welche jeweils der ersten und zweiten Elektrode zugewandt sind, mit dem Beschichtungsmaterial beschichtet werden und nur eine Fläche des zweiten Separators, welche der zweiten Elektrode zugewandt ist, mit dem Beschichtungsmaterial beschichtet wird.

13. Verfahren nach Anspruch 7, wobei die in dem Schritt (S10) hergestellte Elektrodenanordnung ferner eine erste Hilfseinheit umfasst, die auf eine erste Endelektrode gestapelt wird, welche die oberste oder unterste erste Elektrode ist, und
die erste Hilfseinheit durch Aufeinanderfolgen eines Separators, einer Anode, eines Separators und einer Kathode von der ersten Endelektrode gebildet wird, wenn die erste Elektrode die Kathode ist und die zweite Elektrode die Anode ist, und durch Aufeinanderfolgen des Separators und der Kathode von der ersten Endelektrode gebildet wird, wenn die erste Elektrode die Anode ist und die zweite Elektrode die Kathode ist.

14. Verfahren nach Anspruch 13, wobei die Kathode der ersten Hilfseinheit umfasst:
einen Kollektor; und
ein kathodenaktives Material, welches nur auf eine Fläche von beiden Flächen des Kollektors aufgebracht wird, die der Grundeinheit zugewandt ist.

15. Verfahren nach Anspruch 7, wobei die in dem Schritt (S10) hergestellte Elektrodenanordnung ferner eine erste Hilfseinheit umfasst, welche auf eine erste Endelektrode gestapelt ist, welche die oberste oder unterste erste Elektrode ist, und
die erste Hilfseinheit durch Aufeinanderfolgen eines Separators, einer Anode und eines Separators von der ersten Endelektrode gebildet wird, wenn die erste Elektrode die Kathode ist und die zweite Elektrode die Anode ist.

16. Verfahren nach Anspruch 7, wobei die in dem Schritt (S10) hergestellte Elektrodenanordnung ferner eine zweite Hilfseinheit umfasst, die auf einen zweiten Endseparator gestapelt ist, welcher der oberste oder unterste zweite Separator ist, und
die zweite Hilfseinheit als eine Kathode dient, wenn die erste Elektrode eine Kathode ist und die zweite Elektrode eine Anode ist, und durch Aufeinanderfolgen einer Anode, eines Separators und einer Kathode von dem zweiten Endseparator gebildet wird, wenn die erste Elektrode die Anode ist und die zweite Elektrode die Kathode ist.

17. Verfahren nach Anspruch 16, wobei die Kathode der zweiten Hilfseinheit umfasst:
einen Kollektor; und
ein kathodenaktives Material, welches nur auf eine Fläche von beiden Flächen des Kollektors aufgebracht wird, die der Grundeinheit zugewandt ist.

18. Verfahren nach Anspruch 7, wobei die in dem Schritt (S10) hergestellte Elektrodenanordnung, ferner eine zweite Hilfseinheit umfasst, die auf einen zweiten Endseparator gestapelt ist, welcher der oberste oder unterste zweite Separator ist,
die zweite Hilfseinheit durch Aufeinanderfolgen einer ersten Kathode, eines Separators, einer Anode, eines Separators und einer zweiten Kathode von dem zweiten Endseparator gebildet wird, wenn die erste Elektrode die Kathode ist und die zweite Elektrode die Anode ist, und
die zweite Kathode der zweiten Hilfseinheit einen Kollektor und ein kathodenaktives Material umfasst und das kathodenaktive Material nur auf eine Fläche von beiden Flächen des Kollektors aufgebracht wird, die der Grundeinheit zugewandt ist.

19. Verfahren nach Anspruch 7, wobei die in dem Schritt (S10) hergestellte Elektrodenanordnung ferner eine zweite Hilfseinheit umfasst, die auf einen zweiten Endseparator gestapelt wird, welcher der oberste oder unterste zweite Separator ist, und
die zweite Hilfseinheit durch Aufeinanderfolgen einer Anode, eines Separators, einer Kathode, eines Separators und einer Anode von dem zweiten Endseparator gebildet wird, wenn die erste Elektrode die Anode ist und die zweite Elektrode die Kathode ist.

## Revendications

1. Procédé de fixation d'un ensemble électrode, le procédé comprenant :
une étape (S10) de fabrication de l'ensemble électrode ayant une structure dans laquelle une pluralité d'électrodes et une pluralité de séparateurs, chacun ayant une surface supérieure à celle de chacune des électrodes, sont empilées en alternance les unes sur les autres ;
une étape (S20) de dépôt d'une bande de fixation ayant une section intermédiaire, qui est inclinée par rapport à une direction dans laquelle les électrodes et les séparateurs sont empilés, sur les bords des séparateurs ; et
une étape (S30) de fixation de la bande de fixation à l'ensemble électrode tout en poussant sur les bords des séparateurs avec la section intermédiaire de la bande de fixation.

2. Procédé selon la revendication 1, dans lequel, dans l'étape (S30), la section intermédiaire de la bande de fixation pousse en oblique les bords des séparateurs.

3. Procédé selon la revendication 1, dans lequel l'étape (S30) comprend :
une étape (S31) de fixation de la section intermédiaire de la bande de fixation à une surface latérale de l'ensemble électrode ; et
une étape (S32) de fixation respective des deux extrémités de la bande de fixation à la surface supérieure et à la surface inférieure de l'ensemble électrode.

4. Procédé selon la revendication 3, dans lequel l'étape (S31) comprend :
une étape de déplacement de la bande de fixation le long d'une direction des surfaces de contact entre les électrodes et les séparateurs ; et
une étape de déplacement de la bande de fixation dans une direction latérale vers le bas ou une direction latérale vers le haut de l'ensemble électrode de façon que la section intermédiaire de la bande de fixation replie les bords de la pluralité de séparateurs dans la même direction.

5. Procédé selon la revendication 1, dans lequel l'étape (S30) est réalisée grâce à un mécanisme de fixation de bande comprenant une première et une seconde partie de préhension servant à saisir les deux extrémités de la bande de fixation de façon que la section intermédiaire de la bande de fixation soit inclinée.

6. Procédé selon la revendication 5, dans lequel l'étape (S30) comprend une étape (S32) de fixation respective des deux extrémités de la bande de fixation à la surface supérieure et à la surface inférieure de l'ensemble électrode, et
l'étape (S32) est réalisée en déplaçant les deux extrémités de la bande de fixation saisie par la première et la seconde partie de préhension du mécanisme de fixation de bande le long d'une direction de surfaces de contact entre les électrodes et les séparateurs.

7. Procédé selon la revendication 1, dans lequel l'ensemble électrode fabriqué dans l'étape (S10) comprend au moins une unité de radical, et
l'unité de radical présente une structure d'empilement dans laquelle une première électrode, un premier séparateur, une seconde électrode et un second séparateur sont empilés séquentiellement les uns sur les autres.

8. Procédé selon la revendication 7, dans lequel l'unité de radical présente une structure dans laquelle la structure d'empilement est répétée une pluralité de fois.

9. Procédé selon la revendication 7, dans lequel l'unité de radical est formée en permettant aux électrodes et aux séparateurs d'adhérer les uns aux autres.

10. Procédé selon la revendication 9, dans lequel une surface de chacun des séparateurs est revêtue avec un matériau de revêtement présentant une adhérence.

11. Procédé selon la revendication 10, dans lequel le matériau de revêtement comprend un mélange de particules inorganiques et un polymère liant.

12. Procédé selon la revendication 10, dans lequel les deux surfaces du premier séparateur, qui se trouvent respectivement en face de la première et de la seconde électrode, sont revêtues avec le matériau de revêtement, et seulement une surface du second séparateur, qui se trouve en face de la seconde électrode, est revêtue avec le matériau de revêtement.

13. Procédé selon la revendication 7, dans lequel l'ensemble électrode fabriqué dans l'étape (S10) comprend en outre une première unité auxiliaire empilée sur une première électrode terminale qui est la première électrode la plus haute ou la plus basse, et
la première unité auxiliaire est formée, de manière séquentielle, par un séparateur, une anode, un séparateur et une cathode à partir de la première électrode terminale quand la première électrode est la cathode, et la seconde électrode est l'anode, et formée, de manière séquentielle, par le séparateur et la cathode à partir de la première électrode terminale quand la première électrode est l'anode, et la seconde électrode est la cathode.

14. Procédé selon la revendication 13, dans lequel la cathode de la première unité auxiliaire comprend :
un collecteur ; et
un matériau actif de cathode qui est appliqué sur seulement une surface, qui se trouve en face de l'unité de radical, des deux surfaces du collecteur.

15. Procédé selon la revendication 7, dans lequel l'ensemble électrode fabriqué dans l'étape (S10) comprend en outre une première unité auxiliaire empilée sur une première électrode terminale qui est la première électrode la plus haute ou la plus basse, et
la première unité auxiliaire est formée, de manière séquentielle, par un séparateur, une anode et un séparateur à partir de la première électrode terminale quand la première électrode est la cathode, et la seconde électrode est l'anode.

16. Procédé selon la revendication 7, dans lequel l'ensemble électrode fabriqué dans l'étape (S10) comprend en outre une seconde unité auxiliaire empilée sur un second séparateur terminal qui est le second séparateur le plus haut ou le plus bas, et
la seconde unité auxiliaire joue le rôle de cathode quand la première électrode est une cathode, et la seconde électrode est une anode, et est formée, de manière séquentielle, par une anode, un séparateur et une cathode à partir du second séparateur terminal quand la première électrode est l'anode, et la seconde électrode est la cathode.

17. Procédé selon la revendication 16, dans lequel la cathode de la seconde unité auxiliaire comprend :
un collecteur ; et
un matériau actif de cathode qui est appliqué sur seulement une surface, qui se trouve en face de l'unité de radical, des deux surfaces du collecteur.

18. Procédé selon la revendication 7, dans lequel l'ensemble électrode fabriqué dans l'étape (S10) comprend en outre une seconde unité auxiliaire empilée sur un second séparateur terminal qui est le second séparateur le plus haut ou le plus bas,
la seconde unité auxiliaire est formée, de manière séquentielle, par une première cathode, un séparateur, une anode, un séparateur et une seconde cathode à partir du second séparateur terminal quand la première électrode est la cathode, et la seconde électrode est l'anode, et
la seconde cathode de la seconde unité auxiliaire comprend un collecteur et un matériau actif de cathode, et le matériau actif de cathode est appliqué sur seulement une surface, qui se trouve en face de l'unité de radical, des deux surfaces du collecteur.

19. Procédé selon la revendication 7, dans lequel l'ensemble électrode fabriqué dans l'étape (S10) comprend en outre une seconde unité auxiliaire empilée sur un second séparateur terminal qui est le second séparateur le plus haut ou le plus bas, et
la seconde unité auxiliaire est formée, de manière séquentielle, par une anode, un séparateur, une cathode, un séparateur et une anode à partir du second séparateur terminal quand la première électrode est l'anode, et la seconde électrode est la cathode.
